(19) Europäisches Patentamt
European Patent Office
Office européen des brevets

(11) EP 0 596 023 B1

(12) EUROPEAN PATENT SPECIFICATION

(45) Date of publication and mention of the grant of the patent:
**14.10.1998 Bulletin 1998/42**

(21) Application number: **92917045.4**

(22) Date of filing: **16.07.1992**

(51) Int Cl.[6]: **C09D 5/16**

(86) International application number:
**PCT/DK92/00227**

(87) International publication number:
**WO 93/02146 (04.02.1993 Gazette 1993/04)**

# (54) PAINT COMPOSITION

ANSTRICHZUSAMMENSETZUNG

COMPOSITION DE PEINTURE

(84) Designated Contracting States:
**AT BE CH DE DK ES FR GB GR IT LI LU MC NL SE**

(30) Priority: **19.07.1991 DK 137491**

(43) Date of publication of application:
**11.05.1994 Bulletin 1994/19**

(73) Proprietor: **J.C. HEMPEL'S SKIBSFARVE-FABRIK A/S**
**DK-2800 Lyngby (DK)**

(72) Inventors:
- **WARNEZ, Michel, Yves**
  **DK-2720 Vanlose (DK)**
- **CHRISTENSEN, Thomas**
  **DK-2665 Vallensbok Strand (DK)**
- **GARMIN, Henriette**
  **DK-3460 Birkerod (DK)**
- **CODOLAR, Santiago, Arias**
  **E-08015 Barcelona (ES)**

(74) Representative:
**Plougmann, Vingtoft & Partners A/S**
**Sankt Annae Plads 11,**
**P.O. Box 3007**
**1021 Copenhagen K (DK)**

(56) References cited:

| | |
|---|---|
| GB-A- 2 042 932 | GB-A- 2 152 947 |
| US-A- 3 990 381 | US-A- 4 594 365 |

Remarks:
The file contains technical information submitted after the application was filed and not included in this specification

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 596 023 B1

Printed by Jouve, 75001 PARIS (FR)

## Description

### FIELD OF THE INVENTION

The present invention relates to sea water-erodible antifouling paint compositions for protecting marine surfaces, in particular for protecting water craft.

### BACKGROUND OF THE INVENTION

For a number of years, intensive use has been made of sea water-erodible antifouling paint compositions in which the polymer of the binder is a trialkyltin derivative of a polymer containing carboxylic acid groups in the monomer segments, the alkyltin groups being situated on the carboxylic acid groups. The principle according to which such paints are erodible is that the carboxyl-alkyltin function slowly hydrolyzes in sea water, i.a. due to the slight alkalinity (pH approx. 8) of sea water. The result of the hydrolysis is partly that biocidal tin compounds are released, partly that the remaining polymer which now comprises free carboxylic acid groups becomes water erodible or soluble. Thus, the overall effect is that the outer layers of the paint coating on the ship's hull slowly dissolve or erode and thereby uncover deeper paint layers which are then eroded away in the same manner.

However, the increasing problem of pollution with tin compounds in harbours as well as the emergence of antifouling components not based on tin or other undesirable metals has lead to intensive research efforts to provide tin-free sea water-erodible antifouling paints. To a large extent, efforts have been concentrated on finding other polymers that are capable of exploiting the same basic principle, namely that side groups on the polymer chain are hydrolyzed by the sea water which then causes the polymer to become water soluble and therefore to dissolve and to cause the paint coating to erode.

Thus, WO 84/02915 describes marine paints of which it is claimed that they are erodible because the polymers in the paints hydrolyze in sea water although the only hydrolysis tests carried out are performed in a medium more alkaline than sea water, namely with a pH value of 9 and at a fairly high temperature, namely 35°C. Furthermore, the only other tests carried out on the paints were long-term tests of the antifouling properties on stationary fiberglass panels submerged at an ocean test site. Thus, no actual determination of any erosion properties of the paint in sea water and when coated on to moving surfaces was carried out.

The marine coating according to GB-A-2,152,947 (Jotun) comprises polymers of ethoxy- or methoxy-alkyl esters of acrylic and methacrylic acid. According to GB-A-2,152,947, these polymers are able to hydrolyze which results in a polymer of monomer units having free carboxylic acid groups.

The erodible paint according to US-A-4,594,365 (Russell et al.) is based on the same principle as in GB-A-2,152,947. Thus, the reference describes polymers having a ratio between a hydrolyzable acrylate or methacrylate monomer and a non-hydrolyzable ethylenically unsaturated monomer of between 10:90 and 90:10. It is stated that the paint is "attacked" by sea water and that "the hydrolyzed microlayer is then sequentially removed by water "friction"" (column 8, lines 13-14).

In GB-A-2,042,932 (Nippon Oil and Fats) it is stated (page 3, lines 11-13) that polymers having free hydroxy groups or free carboxylic acid cannot be used in connection with metallic biocides, e.g. cuprous oxide, due to gelation of the paint composition prior to use.

It is the object of the present invention to provide a non-hydrolyzable sea water-erodible antifouling paint composition free of undesirable metals, in particular tin-free, for protecting surfaces of marine structures in order to reduce the fouling of such surfaces, in particular the outer surfaces of ships' hulls.

A further object is to provide marine structures having an improved antifouling coating of a sea water-erodible, non-hydrolyzable free of undesirable metals, in particular tin-free, coating film.

### SUMMARY OF THE INVENTION

It has been found that the above objects can be obtained by using coatings comprising film forming binders, which binders contain certain polymers which confer sea water erodibility to the binder where the sea water erodibility is not caused by hydrolysis of the polymers. Instead, it is believed that the erodibility is due to the polymers having a suitable hydrophilicity and consequent water absorption properties in sea water which results in a poor mechanical strength of the outermost parts of a paint coating once sea water-soluble pigments therein have been leached out from those outermost parts, the mechanically weakened outer parts of the paint being removed by the action of sea water moving against the surface carrying the coating.

Thus, the invention provides a sea water-erodible antifouling paint composition <u>AFP</u> for protecting marine surfaces, comprising a film-forming binder, at least one pigment which is soluble in sea water in an amount of at least 1 mg/litre, at least one antifouling agent which may be the pigment or one of the pigments, the total pigment content of the

composition being in the range of 10-60% of the solids volume of the paint composition, the sea water-soluble pigment or pigments constituting at least 10% of the solids volume of the paint composition, any sea water-insoluble pigments, when present, constituting at the most 50% of the solids volume of the paint composition,
said binder comprising at least one polymer P1 of a weight average molecular weight of at least 2000 which is water-insoluble and which comprises, as the sea water erodability-conferring segments, segments of the formula Ia

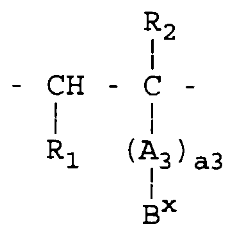 (Ia)

wherein

$R_1$ and $R_2$ each independently is hydrogen or $C_{1-4}$ alkyl,
$A_3$ is $C_{1-4}$ alkylene or phenylene,
$a_3$ is 0 or 1, and
the group $B^x$ is a group $D^x$, or a group $B^1$, $B^2$, $B^3$, $B^4$, or $B^5$

$-CO-O-D^x$ ($B^1$) $-CO-NH-D^x$ ($B^2$)

$-NH-CO-D^x$ ($B^3$) $-O-D^x$ ($B^4$)

$-OH$ ($B^5$)

wherein $D^x$ is a group

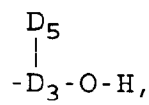

wherein $D_3$ is $C_{1-4}$ alkylene; phenylene optionally substituted with 1 or 2 $C_{1-2}$ alkyl; or a phenyl-$C_{1-4}$ alkyl moiety having the group $D_5$ attached to the phenyl ring, and having the free bond shown located on the phenyl ring and the group -O-H attached to the alkyl part, or vice versa, the phenyl part optionally being substituted with 1 or 2 substituents selected independently from hydroxy and $C_{1-4}$ alkoxy, and $D_5$ is hydrogen, hydroxy or $C_{1-4}$ alkoxy;

the kind and concentration of the segments Ia in the polymer P1 being so selected that the polymer P1, when incorporated as the binder in a coating composition S of the following solids composition, stated as solids volume parts:

60 parts by volume of the binder (polymer(s)),
10 parts by volume of cuprous oxide with an average particle size of 2-4 μm,
26 parts by volume of zinc oxide with an average particle size of approximately 0.2 μm, and
4 parts by volume of thixotropic bentonite results in an erosion rate of the coating in sea water with a salinity in the range of 37-38 parts per thousand of at least 1 μm per 18,520 km (10,000 nautical miles) when the coating has been applied on and has been allowed to form a continuous film on the convex surface of a cylinder of diameter 1 meter and the coated cylinder is rotated with a peripheral speed of 27.78 km/h (15 knots) in sea water of a temperature between 10 and 30°C;
whereby, when the film-forming binder comprises more than one polymer, each other polymer is either

a polymer P1 as defined above,

a polymer P2 of a weight average molecular weight of at least 2000 which is water-insoluble and comprises segments of the formula Ia as defined above, the kind and concentration of the segments Ia and other segments in the polymer P2 being so selected that the polymer P2, when incorporated as the binder in the coating composition S as defined above, results in an erosion rate of the coating in sea water of less than 1 μm per 18,520 km (10,000 nautical miles) when tested as defined above, or

a film-forming polymer P3 of a weight average molecular weight of at least 2000 which does not comprise segments Ia, the polymer P3, when incorporated as the binder in the coating composition S as defined above, resulting in an erosion rate of the coating in sea water of less than 1 μm per 18,520 km (10,000 nautical miles) when tested as defined above, or

a polymer P4 of a weight average molecular weight of at least 2000 which comprises sea water erodibility-conferring segments which are not segments Ia, the polymer P4, when incorporated as the binder in the coating composition S as defined above, resulting in an erosion rate of the coating in sea water of at least 1 μm per 18,520 km (10,000 nautical miles) when tested as defined above,

and, when the film-forming binder consists of more than one polymer, then the total binder composition, when incorporated as the binder in a coating composition S, as defined above, results in an erosion rate of the coating in sea water with a salinity in the range of 37-38 parts per thousand of at least 1 μm per 18,520 km (10,000 nautical miles) when tested as defined above; and

the antifouling paint AFP having an erosion rate in sea water, when tested under the conditions defined above, in the range between 1 μm and 50 μm per 18,520 km (10,000 nautical miles),

with the proviso that

A. the antifouling paint is free from compounds of tin, compounds of arsenic, compounds of lead, and compounds of mercury, and

B. the paint composition contains less than 8% by volume, calculated on the total solids volume of the composition, of any of the following compounds, or of any combination of the following compounds: hexachlorophene, tetrachloroisophthalonitrile, 1,2,3-trichloro-4,6-dinitrobenzene in pigment form.

US Patent 3,990,381 describes various hydrophilic polymer coatings for underwater surfaces, the purpose of such coatings being to provide a water-swollen coating on the surface of the underwater structure which apparently results in reduced friction. The coatings of the reference may consist of linear polymers but preferably consist of crosslinked coatings in order to ensure more permanent adherence of the coating to the underwater structure.

The antifouling components described specifically in US patent 3,990,381 are primarily compounds of lead, tin, mercury, and arsenic, but also include copper compounds and various organic compounds. However, the only coatings tested over short distances on watercraft with respect to any friction-reducing properties are either clear varnishes without any pigments at all or a coating comprising exclusively triphenyl lead acetate as the antifouling pigment. Other tests involve determining the antifouling properties of various coatings by applying a coating to metal or fiberglass-reinforced plastic panels which were then located stationary under water at a test site. Thus, it is not possible to determine from the reference whether any of the coatings consisting of linear, non-crosslinked polymer coatings erode, either because the tests carried out on moving watercraft are performed over far too short distances or because the coatings have been applied to stationary panels which means that any possible erosion properties will not be discernible.

In the present context, the term "erodible" is intended to mean that the coating in question and under the test conditions described is subject to a reduction of the thickness of the coating of at least 1 μm per 18,520 km (10,000 nautical miles) of relative movement between the coated surface and the surrounding aqueous medium due to removal of coating material from the surface of the coating.

For each of the individual polymers P1, P2, P3, and P4 it is preferred that the weight average molecular weight (Mw) of the polymer is in the range from 2,000 to 1,000,000, in particular in the range from 20,000 to 200,000.

A preferred embodiment of the paint composition of the invention is that wherein $A_3$ is $C_{1-4}$-alkylene.

In another preferred embodiment, each group $B^x$ independently is a group $B^1$, $B^2$, $B^4$ or $B^5$.

Another preferred embodiment of the invention is a paint composition in which each group $B^x$ independently is a

group $B^1$ or $B^2$. Within this embodiment, it is particularly preferred that the factor a3 is 0.

Among such compositions, it is particularly preferred that $R_1$ and $R_2$ each independently is hydrogen, methyl or ethyl.

Within this preferred embodiment of the invention, it is particularly preferred that each group $B^x$ independently is a group $B^1$, and in such cases it is especially preferred that $R_1$ is hydrogen, and $R_2$ is hydrogen or methyl.

With respect to the polymer P1, it is preferred that the sea water erodibility-conferring segments have the formula Ia. In such polymers, it is preferred that $D^x$ is a group $-D_3(D_5)-O-H$ in which $D_5$ preferably is hydrogen. A most preferred example of such compounds are those in which $D^x$ is $-CH_2CH_2OH$.

The term "$C_{1-4}$ alkyl" is intended to mean a branched or unbranched saturated hydrocarbon group with 1-4 carbon atoms such as methyl, ethyl, n-propyl, isopropyl, n-butyl, isobutyl, sec.butyl, and tert.butyl. The term "$C_{1-4}$alkoxy" is intended to mean an oxy function substituted with $C_{1-4}$ alkyl as defined above. The term "$C_{1-4}$ alkylene" is intended to mean a branched or unbranched bifunctional hydrocarbon group with 1-4 carbon atoms such as methylene, dimethylene, trimethylene, tetramethylene, and 2-methyl-trimethylene.

Examples of suitable or potentially suitable monomers which, upon polymerization, form segments of the formula Ia are the following:

**Monohydroxy functional acrylates and methacrylates**

2-hydroxyethyl methacrylate
2-hydroxyethyl acrylate
butanediol monoacrylate
butanediol monomethacrylate
2-hydroxypropyl methacrylate
2-hydroxypropyl acrylate
3-hydroxypropyl methacrylate
3-hydroxypropyl acrylate
3-methoxy-2-hydroxy propyl methacrylate
3-methoxy-2-hydroxy propyl acrylate
2-hydroxybutyl acrylate
2-hydroxybutyl methacrylate

**Dihydroxy functional acrylates and methacrylates**

2,3-dihydroxypropyl methacrylate
2,3-dihydroxypropyl acrylate
3,4-dihydroxybutyl acrylate
3,4-dihydroxybutyl methacrylate

**Hydroxy functional acrylamides and methacrylamides**

N-(2-hydroxyethyl) methacrylamide
N-(2-hydroxyethyl) acrylamide
N-(2-hydroxypropyl) methacrylamide
N-(2-hydroxypropyl) acrylamide
N-methylol methacrylamide
N-methylol acrylamide
N-(1-hydroxyethyl) acrylamide
N-(1-hydroxyethyl) methacrylamide
N-[1,1-bis(hydroxymethyl)ethyl] acrylamide
N-[1,1-bis(hydroxymethyl)ethyl] methacrylamide
N-(2,3-dihydroxypropyl) acrylamide
N-(2,3-dihydroxypropyl) methacrylamide
N-(1-ethyl-2-hydroxyethyl) methacrylamide

Hydroxyfunctional vinyl ethers

vinyl hydroxybutyl ether
vinyl 2-hydroxyethyl ether

**Hydroxyfunctional allyl ethers**

allyl 2-hydroxyethyl ether
3-allyloxy-1,2-propanediol
allyloxy propanol

**Allyl alcohols**

allyl alcohol
1-methyl allyl alcohol
2-methyl allyl alcohol

**Hydroxyfunctional alkenes**

1-butene-4-ol
2-methyl-1-buten-4-ol
1-penten-4-ol
1-penten-5-ol
2-methyl-1-penten-4-ol
3-methyl-1-penten-4-ol

Particularly preferred monomers are following:

2-hydroxyethyl methacrylate
2-hydroxyethyl acrylate
butanediol monoacrylate
butanediol monomethacrylate
2-hydroxypropyl methacrylate
2-hydroxypropyl acrylate
3-hydroxypropyl methacrylate
3-hydroxypropyl acrylate
3-methoxy-2-hydroxy propyl methacrylate
3-methoxy-2-hydroxy propyl acrylate
2-hydroxybutyl acrylate
2-hydroxybutyl methacrylate

2,3-dihydroxypropyl methacrylate
2,3-dihydroxypropyl acrylate
3,4-dihydroxybutyl acrylate
3,4-dihydroxybutyl methacrylate

Especially preferred monomers are:

2-hydroxyethyl methacrylate
2-hydroxyethyl acrylate
butanediol monoacrylate
butanediol monomethacrylate
2-hydroxypropyl methacrylate
2-hydroxypropyl acrylate

A most particularly preferred polymer P1 is the homopolymer of 2-hydroxyethyl methacrylate (also known as HEMA).

The remaining segments in polymers P1 and P2 not represented by the formula Ia may be any segments arising from monomers that are capable of polymerizing with olefinic monomers to form polymers. It is preferred that such other segments are segments that originate from olefinic monomers different from those forming the segments of the formula Ia. Since the segment Ia confers seawater erodibility, the remaining other segments will be either hydrophilic (although usually not as hydrophilic as the segment Ia) or be hydrophobic. Typical types of hydrophobic comonomers are esters of acrylic and methacrylic acid where the ester moiety does not contain any polar groups as well as other

hydrophobic derivatives of acrylic or methacrylic acid, styrene or derivatives thereof or hydrophobic esters of vinyl alcohol.

Typical specific examples of such comonomers are the following: methyl methacrylate, n-butyl methacrylate, n-butyl acrylate, tert-butyl methacrylate, tert-butyl acrylate, sec-butyl methacrylate, sec-butyl acrylate, ethylhexyl acrylate, ethyl methacrylate, octyl acrylate, lauryl acrylate, isopropyl acrylate, isopropyl methacrylate, styrene, α-methyl styrene, vinyl acetate, vinyl toluene, and acrylonitrile.

The polymer P3 may be any of the seawater non-erodible and physically drying polymers that are normally used in coating and paint compositions within the art. Typical examples are copolymers of vinyl acetate and vinyl isobutyl ether, copolymers of vinyl chloride and vinyl acetate, and copolymers of vinyl chloride and vinyl isobutyl ether; alkyd resins or modified alkyd resins such as styrenated alkyd resins; ketone resins; hydrocarbon resins such as petroleum fraction condensates; chlorinated rubbers; styrene copolymers such as styrene/butadiene copolymers, and styrene/acrylate copolymers; acrylic resins such as isobutyl methacrylate copolymers, methyl methacrylate/n-butyl methacrylate copolymers; polyamide resins such as polyamide based on dimerized tall oil fatty acids; cyclized rubbers; and epoxy esters.

The polymer P4 may be for example one of the copper-containing acrylic polymers described in EP 342276 and EP 220965, both of which are hereby incorporated by reference. Alternatively, the polymer may be one of the polymers containing units of acrylic or methacrylic acid alkyl, aryl, or arylalkyl esters described in WO 84/02915 which is hereby incorporated by reference.

Particularly preferred specific examples of polymers P1 which contain other segments than those of formula Ia are copolymers between on the one hand 2-hydroxyethyl methacrylate and on the other hand methyl methacrylate or butyl methacrylate, the content of methyl methacrylate or butyl methacrylate being in the range from 0-15 mole percent.

Preparation of a polymer P1 as well as a polymer P2, can in principle be carried out in two different ways. Either, a fully functionalized monomer corresponding to the formula Ia, where the two carbon atoms bearing the free bonds are instead connected by a double bond, can be polymerized (either on its own to form a homopolymer or with one or more comonomers such as those indicated above in order to form a copolymer) or an already formed polymer which does not have all the functions comprised in the general formula Ia in its structure can be reacted with one or more reagents which insert the necessary functional group to obtain the functional polymer. It is normally preferred to polymerize the functional monomer due to the problems with unreacted reagents, side-chains and difficulties in purification of the polymer which may occur when functionalizing a polymer.

Homopolymerization of acrylates, methacrylates, acrylamides and methacrylamides as well as copolymerization of these with each other and with other monomers such as the hydrophobic monomers mentioned above and copolymerization of vinyl ethers, allyl alcohols and allyl ethers (such as those mentioned above) with other monomers (such as methacrylates, acrylates, vinyl acetate, styrene etc.) is normally carried out in an organic solvent which is a solvent for the resulting polymer. The solvent may be an alcohol such as n-butanol, ethanol, n-propanol, methoxypropanol, isopropanol, sec-butanol, or another solvent such as xylene, toluene, hexane or diethyl ether, the concentration of the monomer in the solution normally being in the range of 10-60% by weight depending on the monomer, the desired polymer and the molecular weight thereof, and the desired viscosity. The polymerization is carried out by means of a free-radical initiator such as benzoyl peroxide, N,N-azobis(isobutyronitrile), and tert-butyl peroxide at a temperature that is optimal for the initiator.

About 25% of the initiator is dissolved in the solvent, and the purified monomer or monomer mixture and about 50% of the initiator dissolved in some of the solvent is added to the mechanically stirred solvent over a period of about two to six hours and the reaction temperature is maintained for additional several hours (usually between two and ten) to ensure completion of the reaction. The remaining 25% of the initiator, dissolved in some of the solvent, is added in small portions distributed evenly over the remaining reaction time. Nitrogen is bubbled through the reaction mixture for at least ten minutes before and during the polymerization. The polymer solution is then cooled down to room temperature. Instead of dissolving some of the initiator in the solvent before adding the monomers, all the initiator can be added dropwise during the polymerization, and instead of adding the initiator and the monomer separately, the initiator can be dissolved in the monomer and added together. Alternatively, all the ingredients can be mixed together and heated to the reaction temperature, which is maintained for several hours (normally two to six hours).

Homopolymerization of vinyl ethers is carried out in dry and pure inert solvents (such as lower alkanes, ether, xylene, toluene) bubbled through with nitrogen and following addition of an initiator for cationic polymerization (such as boron triflouride, aluminium trichloride, tin chloride, boron triflouride etherate) at temperatures below 0°C. The monomer must be purified just before polymerization. The initiator is dissolved in the solvent and the mixture is cooled down. The monomer is cooled down and added dropwise to the solution over a period of time, the length of which depends on the system.

In the event that it is desired to prepare functional polymers by functionalizing an already prepared polymer, examples of monomers that are to form the basis of segments of the formula Ia may be monoacids such as crotonic acid, vinyl acetic acid, acrylic acid, and methacrylic acid; diacids such as fumaric acid, maleic acid, itaconic acid, citraconic

acid, and mesaconic acid; triacids such as aconitic acid; and amides such as acrylamide, methacrylamide, and crotonamide.

The further functionalization of the polymer containing the above mentioned acid and amide monomers may be performed in a manner known per se such as esterification of the acid functions with the desired group or substitution of the nitrogen atom in amide with the relevant group.

It is preferred that the total pigment content of the composition is in the range of 25-50% of the solids volume of the paint composition. With respect to the sea water-soluble pigment or pigments, it is preferred that they constitute at least 20% of the solids volume of the paint composition. It is also preferred that any sea water-insoluble pigments, when present, constitute at the most 40% of the solids volume of the paint composition.

An antifouling agent present in the paint composition of the invention may either be one of several different types of biocides such as algicides, fungicides or bactericides, or it may be one of several types of fouling release agents, i. e. agents which prevent the marine organisms from achieving significant adhesion on the painted surface.

Typical examples of biocides are copper compounds, such as cuprous oxide, cuprous thiocyanate, copper powder, copper alloy powder, copper naphthenate, copper octoate or copper rosinate; metal dithiocarbamates, such as zinc ethylene bis (dithiocarbamate), zinc methylene bis (dithiocarbamate), copper ethylene bis(dithiocarbamate), zinc dimethyl dithiocarbamate; zinc oxide; zinc pyridinethione; tetramethyl thiuram disulfide; methylene bis(thiourea); n-butyl catechol; captan; substituted isothiazolones, such as 4,5-dichloro-2-n-octyl-n-isothiazolin-3-one; 2-(N,N-dimethylthiocarbamoylthio)-5-nitrothiazole; tetrachloroisophthalonitrile; 2-methylthio-4-(tert.butylamino)-6-(cyclopropylamino)-s-triazine; N,N-dimethyl-N'-phenyl-N'-(fluorodichloromethylthio)-sulfamide; N'-(3,4-dichlorophenyl)-N,N-dimethylurea; and mixtures thereof.

Typical examples of fouling release agents are silicone compounds, such as a dimethylsiloxane-containing liquid or resin, or a liquid methyl phenyl silicone; or hydrocarbons, such as petrolatum, white oil, paraffin oil, or paraffin wax; or mixtures thereof.

Apart from the polymer P1 and optionally the polymers P2, P3, and P4 and the antifouling agent or agents and pigment or pigments, the antifouling paint composition AFP according to the invention may contain any of the other commonly used formulating materials within the paint technology. Such component may include fillers, colouring materials, auxiliary agents and, optionally, carriers depending on whether the paint composition is to be formulated as a liquid paint or is to be formulated as a paint in powder form.

Sea water-insoluble pigments may for example be selected from grades of titanium dioxide, red iron oxide, carbon black, graphite, yellow iron oxide, phthalocyanine blue, and phthalocyanine green. Such materials are characterized in that they render the final paint coating non-transparent and non-translucent. However, the paint composition according to the invention may also comprise pigment-like ingredients such as fillers selected from calcium carbonate, dolomite, talc, mica, barium sulphate, kaolin, and quartz flour. Such materials are characterized in that they do not render the paint non-translucent and therefore do not contribute significantly to hide any material below the coating of the paint composition of the invention.

Auxiliary agents may be any of those that are commonly used within paint technology. Examples of such auxiliary agents include natural gum rosin or gum rosin derivatives such as zinc calcium rosinate, limed rosin, dimerized rosin and rosin ester, or vegetable oils such as linseed oil.

Auxiliary agents may also comprise plasticizers such as chlorinated paraffin; low molecular weight polybutene; phthalates such as dibutyl phthalate, benzyl butyl phthalate, dioctyl phthalate, and diisodecyl phthalate; phosphate esters such as tricresyl phosphate, and 2-ethylhexyl diphenyl phosphate; sulfonamides such as alkyl-p-toluene sulfonamide; and polymeric acrylic plasticizers such as liquid polyacrylic acid n-butyl ester.

Other auxiliary agents include surfactants such as derivates of propylene oxide or ethylene oxide such as alkylphenolethylene oxide condensates; and soya lecithin.

Further auxiliary agents include defoaming agents such as silicone oils.

Further examples of auxiliary agents include, if necessary, catalysts such as dryers, e.g. metal octoates and metal naphthenates.

Yet further auxiliary agents include stabilizers such as stabilizers against light and heat, e.g. 2-(2'-hydroxy-3'-Z-butyl-S'-methylphenyl) -5-chlorobenzotriazole; stabilizers against moisture such as molecular sieves; and stabilizers against oxidation such as 2,5-ditert.butyl-hydroquinone.

Other auxiliary agents include inhibitors such as polymerization inhibitors, e.g. para-benzoquinone, hydroquinone, and methyl-hydroquinone.

Still further auxiliary agents include coalescing agents such as glycols; and thickeners and anti-settling agents such as colloidal silica, aluminium stearate, hydrogenated castor oil, polyethylene fibers, and organo-modified clays.

When preparing a liquid paint composition, a carrier may be any suitable medium in which the components of the antifouling paint AFP are dissolved or dispersed. Such media are usually organic-based. The role of the medium is to permit easy application of the antifouling paint AFP, to evaporate after application and leave a dry film. Thus, it may be media in which the various polymers in the paint composition may be dissolved, but it may also be a medium in

which the polymer is dispersed such as when forming a dispersion or latex paint.

Examples of liquid carries include water; alcohols, such as methanol, ethanol, propanol, isopropanol, butanol, isobutanol, or benzyl alcohol; alcohol/water mixtures such as ethanol/water mixtures; aliphatic and aromatic hydrocarbons, such as white spirit, toluene, xylene, or naphtha solvent; ketones, such as methyl ethyl ketone, acetone, methyl isobutyl ketone, methyl isoamyl ketone, diacetone alcohol, or cyclohexanone; ether alcohols, such as 2-butoxyethanol, propylene glycol monomethyl ether, or butyl diglycol; esters, such as methoxypropyl acetate, n-butyl acetate, or 2-ethoxyethyl acetate; chlorinated hydrocarbons, such as methylene chloride or trichloroethylene; and mixtures thereof, as well as any other carriers usually employed within the coating industry.

The antifouling paint composition AFP may be prepared by any suitable technique that is commonly used within the field of paint production. Thus, the various components may be mixed together using a high speed disperser, a ball mill, a pearl mill, a three-roll mill etc.

The antifouling paint composition according to the invention may be applied to the marine structure to be protected by means of any of the usual techniques used within the paint field such as by means of a brush, a roller, a pad, by dipping, by spraying etc. The exact technique chosen depends upon the object to be protected and also upon the particular composition (such as its viscosity etc.) and upon the particular situation such as whether the object is in the water or is out of the water. Preferred applications techniques are spraying and by means of a brush or a roller.

The paint composition according to the invention may be applied to a variety of solid objects that come into contact with sea water, for example vessels (including but not limited to boats, yachts, motorboats, motor launches, ocean liners, tugboats, tankers, container ships and other cargo ships, submarines (both nuclear and conventional), and naval vessels of all types); pipes; shore and off-shore machinery, constructions and objects of all types such as piers, pilings, bridge substructures, underwater oil well structures etc; nets and other mariculture installations; and buoys; and is especially applicable to the hulls of ships and boats and to pipes.

Prior to the application of a paint composition of the invention to a marine structure, the marine structure may first be coated with a primer which may or may not contain antifouling agents, but otherwise contain the ingredients as described for the antifouling paint AFP. In a preferred embodiment, the primer is a sea water non-erodible paint having a composition as that of the antifouling paint AFP but which erodes at a rate of less than 1 μm per 18,520 km (10,000 nautical miles). Such a primer may i.a. be obtained by using only a polymer P2 as a polymer containing the segment Ia.

Thus, the present invention also concerns a marine structure having an adherent continuous exposed sea water-erodible coating film of an antifouling paint, the coating comprising a film-forming binder as defined in claim 1, at least one pigment which is soluble in sea water in an amount of at least 1 mg/litre, at least one antifouling agent which may be the pigment or one of the pigments, the total pigment content of the coating being in the range of 10-60% of the solids volume of the coating, the sea water-soluble pigment or pigments constituting at least 10% of the solids volume of the coating, any sea water-insoluble pigments, when present, constituting at the most 50% of the solids volume of the coating, the average dry film thickness of the coating being at least 40 μm, in particular 40-1,000 μm, especially 50-600 μm.

A useful average total dry film thickness of a paint composition AFP on a marine structure may also be expressed in terms of the expected service life combined with the erosion rate. Thus, the dry film thickness will preferably be between 1 and 50 μm per month of expected service life, which will usually be between 40 μm and 600 μm average dry film thickness for a service life of between 1 and 5 years.

The desired film thickness may be obtained either by application of a single coat or by application of several coats to achieve the desired average total dry film thickness.

In an extremely idealized and simplified model, a very rough guide to the average dry film thickness T expressed in μm may be provided by the formula

$$T = \frac{ER \times M}{10{,}000}$$

However, as it will be well known to the person skilled in the art, the above formula is not able to take into account the many other factors, apart from covered distance, that determine the erosion rate of a particular paint coating on a ship. Such factors include, but are not limited to, average sailing speed, since higher speed will tend to erode a coating faster for a given distance; salinity and temperature of the sea regions through which the ship passes since these parameters may affect the water absorption of the polymer as well as the rate at which water-soluble pigments are leached from the coating; the operational pattern of the ship, i.e. primarily the ratio between time at sea and time in port since erosion of the coating also takes place, albeit at a significantly lower rate, when the ship is stationary; as well as the fact that erosion of a paint coating on the hull of a ship does not proceed at the same rate on different areas of the hull in that the coating will probably be eroded faster for example at the bow or the rudder than for example at the keel or at the water line.

As a result of such influences, the optimum dry film thickness of a paint coating on a ship operated according to

the method of the invention will vary considerably compared to the average dry film thickness calculated from the simple formula above and may in practice vary between 0.1 and 10 times this calculated thickness. However, it will be well within the capabilities of the person skilled in the art to determine the average dry film thickness as well as the dry film thickness distribution on a ship given the distance M and the erosion rate ER when taking into consideration i.a. the various factors discussed above.

The discussion above is initially directed to the situation where a coat of a single erodible paint composition is used. However, the method of the invention may also be applied to a situation where the part of the exterior of the craft which, during operation of the craft, is immersed in water is coated with several superimposed layers of several paints, especially where such coats have different erosion rates. Thus, it would in some circumstances be advantageous for the craft to be provided with for example 3 erodible coats, where the first or innermost coat has a relatively slow erosion rate such as between 1 and 5 μm per 18,520 km (10,000 nautical miles) when tested as described above, the second coat has a higher erosion rate such as between 5 and 10 μm per 18,520 km (10,000 nautical miles), and the third and outermost coat has a still higher erosion rate of for example between 10 and 20 μm per 18,520 km (10,000 nautical miles) or even higher. Such coating patterns would have the advantage that it would reduce the chance of the craft suddenly being without any erodible coating at all on part of or all of the exterior of the craft which is immersed in water during operation of the craft, since the erosion rate becomes progressively slower as the coating layers are eroded away. It is to be understood that the application of such multilayer coatings is also encompassed by the method of the invention.

The invention is further illustrated by means of the following examples.

EXAMPLE 1

A polymer was synthesized by solution polymerization in the following manner:
331.2 g of methoxypropanol (MePr), 129.6 g of 2-hydroxyethyl methacrylate (HEMA) and 1.2 g of dilaurylperoxide (DLP) was placed in a closed 1 liter Erlenmeyer flask and placed in an oven at 80°C for 21 hours.

The density Dm in gram per milliliter of the resulting solution was measured at 25°C (ASTM D 1475-90) to be 1.00. The content in percent by weight of non-volatile (NV) was measured (ASTM D 1644-88, test method A) to be 29.0.

The absorption (SWA) of sea water in percent by weight of a polymer film was measured as follows. The polymer solution was applied by means of a Doctor Blade applicator with a clearance of 200 μm on to a pre-weighed (weight A) glass panel. The film was then dried for 24 hours at 45°C in an oven after which the glass panel was weighed again (weight B). The panel was then immersed in aerated artificial sea water (ASTM D 1141-75) for 72 hours. The panel was then dried gently on its surface with filter paper and weighed again (weight C). SWA was calculated from the formula SWA = (C - B) x 100/(B - A) which gave the result of 8.

EXAMPLE 2

The polymerization in example 1 was repeated with the following ingredients:

331.2 g MePr,
55.1 g HEMA,
62.1 g methyl methacrylate (MMA) and
1.2 g DLP.

The following characterizing data were obtained in the same manner as in example 1:

Dm = 0.98
NV = 24.7
SWA = 4

EXAMPLE 3

A polymer was synthesized by solution polymerization in the following manner:
690 g MePr, 360 g n-butanol (n-BU), and 4,5 g N,N-azobis(isobutyronitrile) (AIBN) was mixed in a 3-necked, 2 liter polymerization flask equipped with thermometer, condenser and separation funnel for addition of monomer. The solution was heated to 80°C. 450 g HEMA was added dropwise over a period of 1 hour from the separation funnel to the mechanically stirred solution. The temperature was maintained at 80°C during the addition. After conclusion of the addition, the heating was switched off and stirring was continued for 1 hour.

The following characterizing data were obtained in the same manner as in example 1:

Dm = 0.98
NV = 29.8
SWA = 11

The viscosity (GH) expressed as Gardner-Holdt Letter (ASTM D 1545-89) of the polymer solution was measured to be V.

EXAMPLE 4

The polymerization in example 3 was repeated with the following ingredients:

690 g MePr
360 g n-BU
4.5 g AIBN
425.5 g HEMA
24.5 g n-butyl methacrylate (BMA)

The following characterizing data were obtained in the same manner as in example 1 and 3:

Dm = 0.97
NV = 30.3
SWA = 15
GH = P

EXAMPLE 5

The polymerization in example 3 was repeated with the following ingredients:

690 g MePr
360 g n-BU
4.5 g AIBN
401.0 g HEMA
51.2 g n-butyl methacrylate (BMA)

The following characterizing data were obtained in the same manner as in example 1 and 3:

Dm = 0.97
NV = 30.4
SWA = 12
GH = S

EXAMPLE 6

Tests were made on a commercially available solution of an erodible tin-containing reference polymer. The polymer used was "BioMet 300" from M&T Chemicals Inc. (a tributyltin methacrylate/methyl methacrylate copolymer dissolved in naphtha solvent).

The following characterizing data were obtained in the same manner as in example 1:

Dm = 1.02
NV = 50
SWA = 0

EXAMPLE 7

A coating was prepared using the polymer solution prepared in example 1 and having the following composition (corresponding to coating composition S):

60 parts by volume (pbv) of the polymer solution from example 1,

10 pbv of cuprous oxide with an average particle size of 2-4 µm,
26 pbv of zinc oxide with an average particle size of 0.2 µm, and
4 pbv of Bentone 38 (Bentone 38 is an organic modified bentonite product from NL Chemicals).

MePr was added as an additional carrier to the ingredients in such an amount that the calculated solids volume concentration (SVC) in percent of the coating was 19.8.

200 ml of the thoroughly mixed coating composition was introduced into a tight metallic container of 0.5 liter capacity together with 100 ml (bulk volume) of glass pearls with a diameter of 2-3 mm. The container was then shaken for 45 minutes on a mechanical shaker. The coating composition was separated from the glass pearls by filtration and the fineness of dispersion was determined (ASTM D 1210-79) to be lower than 30µm.

An acrylic test panel (13.5 x 7 cm) with a curvature corresponding to that of a cylinder with a diameter of 1 meter was first coated on its convex surface with 80 µm (dry film thickness, DFT) of a commercial vinylic primer (Hempanyl Tar 1628, from Hempel's Marine Paints) applied by air spray. The primed panel was then coated with the above experimental coating composition in a DFT of 200 µm using a Doctor Blade. After drying, bands of 1 cm width of a commercial, non-erodible vinylic antifouling coating (Classic 7655, from Hempel's Marine Paints) were applied along each longitudinal edge by dipping. As a result of this, the central part with a width of 5 cm remained uncovered by the non-erodible coating.

The panel was fixed onto the convex surface of a cylindrical drum of 1 meter in diameter and was rotated in sea water with a salinity in the range of 37-38 parts per thousand at an average temperature of 26°C at a test site in the harbour of Villanueva y Geltrú in northeastern Spain (see also Morales E. & Arias E., Rev. Iber. Corros. y Prot., vol XIX(2), 1988, pp 91-96). The rotor was rotated at a peripheral speed of 27.78 km/h (15 knots) for a relative distance of 20,190 km (10,900 nautical miles).

Paint chips were collected from the test panel in such a way that their surface comprised both a part coated with the experimental coating only as well as a part coated with both the experimental coating and the non-erodible coating. The chips were embedded in paraffin wax and cut with a microtome. Cross sections of the experimental coating were examined under a microscope. Compared to the part coated with the non-erodible coating, the experimental coating showed a decrease of DFT of the outer layer of 38 µm corresponding to an erosion rate (ER) of 35 µm per 18,520 km (10,000 nautical miles).

The above experimental coating was also tested for antifouling properties by applying it onto an acrylic test panel (10 x 20 cm) in a DFT of 100±10 µm using a Doctor Blade. From a raft, the test panel was immersed into the sea at a depth of 35 cm below the surface at the test site at Villanueva y Geltrú described above. An uncoated acrylic panel was also immersed in the same manner as a blank.

The panels were inspected every 4 weeks during a total immersion period of 20 weeks. At each inspection, the panels were rated on a scale from 0 (no fouling) to 5 (100% fouling) with respect to each of the three categories of fouling, namely slime, algae, and animals. At the end of the immersion period, all ratings from each inspection were cumulated to provide a sum of fouling ratings (SFR) with which relative comparisons could be made within groups of samples tested during the same period of time.

The panel coated with the experimental coating had a SFR of 6, whereas the blank had a SFR of 50.

EXAMPLE 8

An experimental coating was prepared as in example 7 using the polymer solution from example 2. The coating composition had the following characteristics:

SVC = 25.3
ER = 0
SFR = 17

Thus, the polymer from example 2 is an example of polymer P2.

EXAMPLE 9

An experimental coating was prepared as in example 7 using the polymer solution from example 3. The coating composition had a SVC of 24.4.

A special primer was prepared in the same manner as the experimental coating of this example and with the following composition:

| | |
|---|---|
| Polymer solution from example 3 | 40 ppv |
| Vinylic resin | 15 ppv |
| Cuprous oxide | 26 ppv |
| Zinc oxide | 10 ppv |
| Titanium oxide (with an oil absorption of 17-23 (ASTM D 281)) | 4 ppv |
| Wetting agent (alkyd with amino fatty acids) | 1 ppv |
| Bentone 38 | 4 ppv |

(The vinylic resin was Laroflex MP 25 (a copolymer of vinyl chloride and vinyl isobutyl ether) from BASF, and the wetting agent was Nuosperse 657 from Tenneco.)

The special primer was applied as an intermediate coat on the curved test panel between the vinyl primer and the experimental coating in a DFT of 40 µm by air spraying. The erosion rate (ER) was 38 µm per 18,520 km (10,000 nautical miles).

EXAMPLE 10

The procedure of example 9 was repeated using the polymer solution from example 4. SVC of the experimental coating was 29.4, and the erosion rate ER was 6 µm.

EXAMPLE 11

The procedure of example 9 was repeated using the polymer solution from example 5. SVC of the experimental coating was 26.9, and the erosion rate ER was 3 µm.

EXAMPLE 12

Using the reference polymer tested initially in example 6, the procedure of example 7 was repeated with the modification that MePr was replaced with xylene as additional carrier. The coating composition had the following characteristics:

SVC = 38.9
ER = 32
SFR = 9

Solutions of other polymers <u>P1</u> may be prepared as follows:

EXAMPLE 13

Poly(2-hydroxypropyl methacrylate)

To a 500 ml 4-necked round-bottomed flask is added 125 g of methoxypropanol and 0.25 g benzoyl peroxide. The solution is heated to 80°C, and nitrogen is bubbled through. Thereafter, 100 g 2-hydroxypropyl methacrylate and 0.75 g benzoyl peroxide dissolved in 25 g methoxypropanol is added dropwise to the stirred solution over 2 hours after which the temperature is maintained at 80°C for further 4 hours. The reaction mixture is then allowed to cool to room temperature.

EXAMPLE 14

Poly(2-hydroxyethyl vinyl ether-co-2-hydroxyethyl methacrylate)

To a 500 ml 4-necked round-bottomed flask is added 140 g of methoxypropanol and 0.15 g N,N-azobis(isobutyronitrile). The solution is heated to 80°C, and nitrogen is bubbled through. Thereafter, 0.45 g N,N-azobis(isobutyronitrile) dissolved in a mixture of 24.2 g 2-hydroxyethyl vinyl ether and 35.8 g 2-hydroxyethyl methacrylate is added dropwise to the stirred solution over 4 hours after which the temperature is maintained at 80°C for further 4 hours. The reaction mixture is then allowed to cool to room temperature.

EXAMPLE 15

Poly(butyl methacrylate-co-2-hydroxyethyl methacrylate)

To a 2000 ml 4-necked round-bottomed flask is added 360 g of n-butanol and 690 g methoxypropanol. The solution is heated to 80°C under stirring, and nitrogen is bubbled through. Thereafter, a mixture of 50 g butyl methacrylate and 400 g 2-hydroxyethyl methacrylate, and a solution of 4.5 g N,N-azobis(isobutyronitrile) in 20 g methoxypropanol are separately added dropwise to the stirred solution over 1.5 hours after which the temperature is maintained at 80°C for further 2 hours. The reaction mixture is then allowed to cool to room temperature.

EXAMPLE 16

A polymer was synthesized by solution polymerization in the following manner: a solution I was prepared as 50 g MePr, 6.5 g formaldehyde and 0.1 g triethylamine were mixed in a 3-necked, 0.5 liter polymerization flask equipped with thermometer, condenser and separating funnel for addition of monomers. The solution was heated to reflux and kept refluxing during the entire synthesis. A solution II of 55 g MePr, 90 g butylmethacrylate (BMA) and 7 g acrylamide were mixed and dissolved in an Erlenmeyer flask. 3 g tert-butylperoxybenzoate was added to solution II. The solution was transferred to separating funnel. 10 w/w % of the solution II was added from the separating funnel to the mechanically stirred solution I. The mixture was refluxed for 15 minutes. The rest of solution II was added dropwise for a period of 2 hours. After conclusion of the addition, the mixture was refluxed for 2 hours and the heating and stirring were switched off and the polymer left to cool off.

The following characterizing data were obtained:

Dm = 0.99
NV = 47.4
Molecular weight Mw = 32.500

EXAMPLE 17

The polymerization of example 1 was repeated with the following ingredients:

50.0 g MePr
8.4 g formaldehyde
0.1 g triethylamine
55 g MePr
80 g butylmethacrylate
10 g acrylamide
3 g tert-butyl peroxybenzoate

The following characterizing data were obtained in the same manner as in example 1:

Dm = 0.99
NV = 47.1
Molecular weight Mw = 30.500

EXAMPLE 18

The polymerization of example 1 was repeated with the following ingredients:

50.0 g MePr
16.8 g formaldehyde
0.1 g triethylamine
55 g MePr
59.7 g butylmethacrylate
20 g acrylamide
3 g tert-butyl peroxybenzoate

The following characterizing data were obtained in the same manner as in example 1:

Dm = 1.04
NV = 45.9
Molecular weight Mw = 128.500

EXAMPLE 19

A polymer was synthesized by solution polymerization in the following manner: 420 g MePr was weighed off in a 4-necked, 1 liter polymerization flask equipped with thermometer, condenser and 2 separating funnels for addition of monomers and initiator. The solution was heated to 90°C. 231 g HEMA and 36 g 4-acetoxystyrene were mixed and added dropwise for a period of 2 hours from the separating funnel to the mechanically stirred solution. 80 g MePr and 0.8 g benzoylperoxide were dissolved and simultaneously added dropwise over a period of 2 hours and 15 minutes from the separating funnel to the mechanically stirred solution. The temperature was maintained at 90°C during the addition. After conclusion of the addition, the temperature and stirring was continued for 4 hours. After this period the heating and stirring were switched off and the polymer left to cool off.

The following characterizing data were obtained:

Dm = 1.03
NV = 35.7
Molecular weight Mw = 220.000

EXAMPLE 20

The polymerization in example 7 was repeated with the following ingredients:

320 g MePr
234 g HEMA
32 g 4-acetoxystyrene
0.8 g benzoylperoxid
80 g MePr

The following characterizing data were obtained:

Dm = 1.03
NV = 37.6
Molecular weight Mw = 275.000

EXAMPLE 21

The polymerization in example 7 was repeated with the following ingredients:

408 g MePr
247 g HEMA
16 g 4-acetoxystyrene
0.8 g benzoylperoxid
80 g MePr

The following characterizing data were obtained:

Dm = 1.03
NV = 35.8
Molecular weight Mw = 185.000

EXAMPLE 22

A polymer was synthesized by solution polymerization in the following manner:

80 g isopropylalcohol, 27 g 96% ethanol and 20 g n-butanol were mixed in a 3-necked, 500 ml polymerization flask equipped with thermometer, condenser and 2 separating funnels for addition of monomers and initiator. The solution was heated to 80°C. 49 g HEMA and 14 g HPMA (hydroxypropyl methacrylate) were mixed and added dropwise for a period of 1 hour.

0.4 g benzoylperoxid (BP), 20 g isopropylalcohol, 3 g MePr and 3 g 96% ethanol were mixed and dissolved. ½ of this solution were added at once simultaneously with the start of addition of monomers from the separating funnel to the mechanically stirred solution. The temperature was maintained at 80°C during the addition. After conclusion of the addition, the temperature and stirring was maintained for 1 hour. After this period the rest of the initiator solution was added dropwise over a period of 1 hour. Heating and stirring were switched off and the polymer left to cool off.

The following characterizing data were obtained:

Dm = 0.90
NV = 27.8
Molecular weight Mw = 108.000

## Claims

1. A sea water-erodible antifouling paint composition AFP for protecting marine surfaces, comprising a film-forming binder, at least one pigment which is soluble in sea water in an amount of at least 1 mg/litre, at least one antifouling agent which may be the pigment or one of the pigments, the total pigment content of the composition being in the range of 10-60% of the solids volume of the paint composition, the sea water-soluble pigment or pigments constituting at least 10% of the solids volume of the paint composition, any sea water-insoluble pigments, when present, constituting at the most 50% of the solids volume of the paint composition,
said binder comprising at least one polymer P1 of a weight average molecular weight of at least 2000 which is water-insoluble and which comprises, as the sea water erodability-conferring segments, segments of the formula Ia

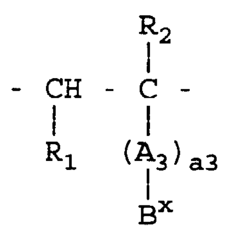

(Ia)

wherein

$R_1$ and $R_2$ each independently is hydrogen or $C_{1-4}$ alkyl,
$A_3$ is $C_{1-4}$ alkylene or phenylene,
a3 is 0 or 1, and the group $B^x$ is a group $D^x$, or a group $B^1$, $B^2$, $B^3$, $B^4$, or $B^5$

$-CO-O-D^x$ ($B^1$) $-CO-NH-D^x$ ($B^2$)

$-NH-CO-D^x$ ($B^3$) $-O-D^x$ ($B^4$)

$-OH$ ($B^5$)

wherein $D^x$ is a group

$$\begin{array}{c} D_5 \\ | \\ -D_3-O-H, \end{array}$$

wherein $D_3$ is $C_{1-4}$ alkylene; phenylene optionally substituted with 1 or 2 $C_{1-2}$ alkyl; or a phenyl-$C_{1-4}$ alkyl moiety having the group $D_5$ attached to the phenyl ring, and having the free bond shown located on the phenyl ring and the group -O-H attached to the alkyl part, or vice versa, the phenyl part optionally being substituted with 1 or 2 substituents selected independently from hydroxy and $C_{1-4}$ alkoxy, and $D_5$ is hydrogen, hydroxy or $C_{1-4}$ alkoxy;

the kind and concentration of the segments Ia in the polymer P1 being so selected that the polymer P1, when incorporated as the binder in a coating composition S of the following solids composition, stated as solids volume parts:

60 parts by volume of the binder (polymer(s)),

10 parts by volume of cuprous oxide with an average particle size of 2-4 μm,

26 parts by volume of zinc oxide with an average particle size of approximately 0.2 μm, and

4 parts by volume of thixotropic bentonite
results in an erosion rate of the coating in sea water with a salinity in the range of 37-38 parts per thousand of at least 1 μm per 18,520 km (10,000 nautical miles) when the coating has been applied on and has been allowed to form a continuous film on the convex surface of a cylinder of diameter 1 meter and the coated cylinder is rotated with a peripheral speed of 27.78 km (15 knots) in sea water of a temperature between 10 and 30°C;
whereby, when the film-forming binder comprises more than one polymer, each other polymer is either

a polymer P1 as defined above,
a polymer P2 of a weight average molecular weight of at least 2000 which is water-insoluble and comprises segments of the formula Ia as defined above, the kind and concentration of the segments Ia and other segments in the polymer P2 being so selected that the polymer P2, when incorporated as the binder in the coating composition S as defined above, results in an erosion rate of the coating in sea water of less than 1 μm per 18,520 km (10,000 nautical miles) when tested as defined above, or
a film-forming polymer P3 of a weight average molecular weight of at least 2000, which does not comprise segments Ia, the polymer P3, when incorporated as the binder in the coating composition S as defined above, resulting in an erosion rate of the coating in sea water of less than 1 μm per 18,520 km (10,000 nautical miles) when tested as defined above, or
a polymer P4 of a weight average molecular weight of at least 2000 which comprises sea water erodability-conferring segments which are not segments Ia, the polymer P4, when incorporated as the binder in the coating composition S as defined above, resulting in an erosion rate of the coating in sea water of at least 1 μm per 18,520 km (10,000 nautical miles) when tested as defined above,
and, when the film-forming binder consists of more than one polymer, then the total binder composition, when incorporated as the binder in a coating composition S, as defined above, results in an erosion rate of the coating in sea water with a salinity in the range of 37-38 parts per thousand of at least 1 μm per 18,520 km (10,000 nautical miles) when tested as defined above; and
the antifouling paint AFP having an erosion rate in sea water, when tested under the conditions defined above, in the range between 1 μm and 50 μm per 18,520 km (10,000 nautical miles),

with the proviso that

A. the antifouling paint is free from compounds of tin, compounds of arsenic, compounds of lead, and compounds of mercury, and

B. the paint composition contains less than 8% by volume, calculated on the total solids volume of the composition, of any of the following compounds, or of any combination of the following compounds: hexachlorophene, tetrachloroisophthalonitrile, and 1,2,3-trichloro-4,6-dinitrobenzene in pigment form.

**2.** A paint composition according to claim 1, wherein the weight average molecular weight (Mw) of the polymer P1 is in the range from 2000 to 1,000,000.

**3.** A paint composition according to claim 2, wherein the weight average molecular weight (Mw) of the polymer P1 is in the range from 20,000 to 200,000.

**4.** A paint composition according to claim 1, wherein the weight average molecular weight (Mw) of the polymer P2 is in the range from 2000 to 1,000,000.

**5.** A paint composition according to claim 4, wherein the weight average molecular weight (Mw) of the polymer P2 is in the range from 20,000 to 200,000.

**6.** A paint composition according to claim 1, wherein the weight average molecular weight (Mw) of the polymer P3 is in the range from 2000 to 1,000,000.

**7.** A paint composition according to claim 6, wherein the weight average molecular weight (Mw) of the polymer P3 is in the range from 20,000 to 200,000.

**8.** A paint composition according to claim 1, wherein the weight average molecular weight (Mw) of the polymer P4 is in the range from 2000 to 1,000,000.

**9.** A paint composition according to claim 8, wherein the weight average molecular weight (Mw) of the polymer P4 is in the range from 20,000 to 200,000.

**10.** A paint composition according to any of the previous claims, wherein the total pigment content of the composition is in the range of 25-50% of the solids volume of the paint composition.

**11.** A paint composition according to any of the previous claims, wherein the sea water-soluble pigment or pigments constitutes at least 20% of the solids volume of the paint composition.

**12.** A paint composition according to any of the previous claims, wherein any sea water-insoluble pigments, when present, constitute at the most 40% of the solids volume of the paint composition.

**13.** A paint composition according to any of the preceding claims, wherein $A_3$ is $C_{1-4}$-alkylene.

**14.** A paint composition according to any of the preceding claims, wherein each group $B^x$ independently is a group $B^1$, $B^2$, $B^4$, or $B^5$.

**15.** A paint composition according to any of claims 1-14, wherein each group $B^x$ independently is a group $B^1$ or $B^2$.

**16.** A paint composition according to claim 15, wherein a3 is 0.

**17.** A paint composition according to claim 16, wherein $R_1$ and $R_2$ each independently is hydrogen, methyl or ethyl.

**18.** A paint composition according to any of the claims 1-12, wherein the segments Ia are derived from monomers selected from

(a) monohydroxy functional acrylates and methacrylates selected from 2-hydroxyethyl methacrylate, 2-hydroxyethyl acrylate, butanediol monoacrylate, butanediol monomethacrylate, 2-hydroxypropyl methacrylate, 2-hydroxypropyl acrylate, 3-hydroxypropyl methacrylate, 3-hydroxypropyl acrylate, 3-methoxy-2-hydroxy propyl methacrylate, 3-methoxy-2-hydroxy propyl acrylate, 2-hydroxybutyl acrylate, and 2-hydroxybutyl methacrylate,

(b) dihydroxy functional acrylates and methacrylates selected from 2,3-dihydroxypropyl methacrylate, 2,3-dihydroxypropyl acrylate, 3,4-dihydroxybutyl acrylate, and 3,4-dihydroxybutyl methacrylate;

(c) hydroxy functional acrylamides and methacrylamides selected from N- (2-hydroxyethyl) methacrylamide, N- (2-hydroxyethyl) acrylamide, N-(2-hydroxypropyl) methacrylamide, N-(2-hydroxypropyl) acrylamide, N-methylol methacrylamide, N-methylol acrylamide, N-(1-hydroxyethyl) acrylamide, N-(1-hydroxyethyl) methacrylamide, N- [1,1-bis (hydroxymethyl) ethyl] acrylamide, N-[1,1-bis(hydroxymethyl)ethyl] methacrylamide, N- (2,3-dihydroxypropyl) acrylamide, N- (2,3-dihydroxypropyl) methacrylamide, and N-(1-ethyl-2-hydroxyethyl) methacrylamide;

(d) hydroxy functional vinyl ethers selected from vinyl hydroxybutyl ether and vinyl 2-hydroxyethyl ether;

(e) hydroxy functional allyl ethers selected from allyl 2-hydroxyethyl ether, 3-allyloxy-1,2-propanediol, and allyloxy propanol;

(f) allyl alcohols selected from allyl alcohol, 1-methyl allyl alcohol, and 2-methyl allyl alcohol; and

(g) hydroxyfunctional alkenes selected from 1-butene-4-ol, 2-methyl-1-buten-4-ol, 1-penten-4-ol, 1-penten-5-ol, 2-methyl- 1-penten-4-ol, and 3-methyl-1-penten-4-ol.

**19.** A paint composition according to claim 18, wherein the monomers are selected from 2-hydroxyethyl methacrylate, 2-hydroxyethyl acrylate, butanediol monoacrylate, butanediol monomethacrylate, 2-hydroxypropyl methacrylate, 2-hydroxypropyl acrylate, 3-hydroxypropyl methacrylate, 3-hydroxypropyl acrylate, 3-methoxy-2-hydroxy propyl methacrylate, 3-methoxy-2-hydroxy propyl acrylate, 2-hydroxybutyl acrylate, 2-hydroxybutyl methacrylate, 2,3-dihydroxypropyl methacrylate, 2,3-dihydroxypropyl acrylate, 3,4-dihydroxybutyl acrylate, and 3,4-dihydroxybutyl methacrylate.

**20.** A paint composition according to claim 19, wherein the monomers are selected from 2-hydroxyethyl methacrylate, 2-hydroxyethyl acrylate, butanediol monoacrylate, butanediol monomethacrylate, 2-hydroxypropyl methacrylate, and 2-hydroxypropyl acrylate.

**21.** A paint composition according to any of the claims 1-12, wherein the polymer P1 is the homopolymer of 2-hydroxyethyl methacrylate.

**22.** A paint composition according to any of the preceding claims, wherein the antifouling agent is a biocide or a fouling release agent.

**23.** A paint composition according to claim 22, wherein the biocide is an algicide, a fungicide, or a bacteriocide.

**24.** A paint composition according to claim 22 or 23, wherein the biocide is selected from copper compounds, such as cuprous oxide, cuprous thiocyanate, copper powder, copper alloy powder, copper naphthenate, copper octoate or copper rosinate; metal dithiocarbamates, such as zinc ethylene bis(dithiocarbamate), zinc methylene bis (dithiocarbamate), copper ethylene bis(dithiocarbamate), zinc dimethyl dithiocarbamate; zinc oxide; zinc pyridinethione; tetramethyl thiuram disulfide; methylene bis(thiourea); n-butyl catechol; captan; substituted isothiazolones, such as 4,5-dichloro-2-n-octyl-n-isothiazolin-3-one; 2-(N,N-dimethylthiocarbamoylthio)-5-nitrothiazole; tetrachloroisophthalonitrile; 2-methylthio-4-(tert.butylamino)-6-(cyclopropylamino)-s-triazine; N,N-dimethyl-N'-phenyl-N'-(fluorodichloromethylthio)-sulfamide; N'-(3,4-dichlorophenyl)-N,N-dimethylurea; and mixtures thereof.

**25.** A paint composition according to claim 22, wherein the fouling release agent is a silicone compound, such as a dimethylsiloxane-containing liquid or resin, or a liquid methyl phenyl silicone; or a hydrocarbon, such as petrolatum, white oil, paraffin oil, or paraffin wax; or mixtures thereof.

**26.** A paint composition according to any of the previous claims, wherein the sea-water insoluble pigments are selected from grades of titanium dioxide, red iron oxide, carbon black, graphite, yellow iron oxide, phthalocyanine blue, and phthalocyanine green, as well as pigment-like ingredients selected from calcium carbonate, dolomite, talc, mica, barium sulphate, kaolin, and quartz flour.

**27.** A paint according to any of the preceding claims which comprises a liquid carrier selected from water; alcohols, such as methanol, ethanol, propanol, isopropanol, butanol, isobutanol, benzyl alcohol, 1,2-propanediol; alcohol/water mixtures such as ethanol/water mixtures; aliphatic and aromatic hydrocarbons, such as white spirit, toluene, xylene, or naphtha solvent; ketones, such as methyl ethyl ketone, acetone, methyl isobutyl ketone, methyl isoamyl

ketone, diacetone alcohol, or cyclohexanone; ether alcohols, such as 2-butoxyethanol, propylene glycol monomethyl ether, or butyl diglycol; esters, such as methoxypropyl acetate, n-butyl acetate, or 2-ethoxyethyl acetate; chlorinated hydrocarbons, such as methylene chloride or trichloroethylene; and mixtures thereof.

**28.** A marine structure having an adherent continuous exposed sea water-erodible coating film of an antifouling paint, the coating comprising a film-forming binder as defined in claim 1, at least one pigment which is soluble in sea water in an amount of at least 1 mg/litre, at least one antifouling agent which may be the pigment or one of the pigments, the total pigment content of the coating being in the range of 10-60% of the solids volume of the coating, the sea water-soluble pigment or pigments constituting at least 10% of the solids volume of the coating, any sea water-insoluble pigments, when present, constituting at the most 50% of the solids volume of the coating, the average dry film thickness of the coating being at least 40 µm.

**29.** A marine structure according to claim 28, in which the average dry film thickness of the coating is in the range of 40-1000 µm.

**30.** A marine structure according to claim 29, in which the average dry film thickness of the coating is in the range of 50-600 µm.

## Patentansprüche

**1.** Durch Meerwasser erodierbare Antifouling-Anstrichmittelzusammensetzung AFP zum Schutz von Meerwasser ausgesetzten Oberflächen, umfassend ein filmbildendes Bindemittel, mindestens ein Pigment, das in Meerwasser in einer Menge von mindestens 1 mg/Liter löslich ist, mindestens ein Antifouling-Mittel, bei dem es sich um das Pigment oder um eines der Pigmente handeln kann, wobei der Gesamt-Pigmentgehalt der Zusammensetzung im Bereich von 10 - 60% des Trockensubstanzvolumens der Anstrichmittelzusammensetzung liegt, das (die) in Meerwasser lösliche(n) Pigment oder Pigmente mindestens 10% des Trockensubstanzvolumens der Anstrichmittelzusammensetzung ausmachen, wobei jegliche in Meerwasser unlöslichen Pigmente, falls anwesend, höchstens 50% des Trockensubstanzvolumens der Anstrichmittelzusammensetzung ausmachen,
wobei das Bindemittel mindestens ein Polymer P1 mit einem Gewichtsmittel des Molekulargewichts von mindestens 2.000 umfaßt, welches in Wasser unlöslich ist und welches als Segmente, die eine Erodierbarkeit durch Meerwasser verleihen, Segmente der Formel Ia

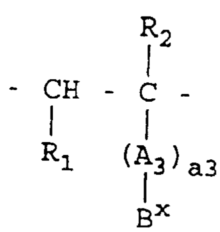

(Ia)

umfaßt, in der

$R_1$ und $R_2$ jeweils unabhängig Wasserstoff oder $C_{1-4}$-Alkyl sind,
$A_3$ $C_{1-4}$-Alkylen oder Phenylen ist,
a3 0 oder 1 ist und

die Gruppe $B^x$ eine Gruppe $D^x$ oder eine Gruppe $B^1$, $B^2$, $B^3$, $B^4$ oder $B^5$ ist,

$-CO-O-D^x$ ($B^1$) $-CO-NH-D^x$ ($B^2$)

$-NH-CO-D^x$ ($B^3$) $-O-D^x$ ($B^4$)

-OH (B[5])

worin $D^x$ eine Gruppe

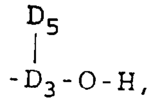

ist, in der $D_3$ $C_{1-4}$-Alkylen; Phenylen, das gegebenenfalls mit 1 oder 2 $C_{1-2}$-Alkyl substituiert ist; oder eine Phenyl-$C_{1-4}$-alkyl-Einheit ist, welche die Gruppe $D_5$ an den Phenylring geknüpft aufweist und die gezeigte freie Bindung an dem Phenylring angeordnet und die Gruppe -O-H an den Alkylteil geknüpft aufweist, oder umgekehrt, wobei der Phenylteil gegebenenfalls mit 1 oder 2 Substituenten substituiert ist, die unabhängig aus Hydroxy und $C_{1-4}$-Alkoxy ausgewählt sind, und $D_5$ Wasserstoff, Hydroxy oder $C_{1-4}$-Alkoxy ist; wobei die Art und Konzentration der Segmente Ia in dem Polymer P1 so gewählt sind, daß das Polymer P1, wenn es einer Anstrichzusammensetzung S mit der folgenden Trockensubstanz-Zusammensetzung, angegeben als Trockensubstanz-Volumenteile:

60 Volumenteile Bindemittel (Polymer(e)),
10 Volumenteile Kupfer(I)-oxid mit einer durchschnittlichen Teilchengröße von 2 - 4 µm,
26 Volumenteile Zinkoxid mit einer durchschnittlichen Teilchengröße von etwa 0,2 µm und
4 Volumenteile thixotroper Bentonit
als das Bindemittel einverleibt wird, eine Erosionsrate des Anstrichs von mindestens 1 µm pro 18.520 km (10.000 nautische Meilen) in Meerwasser mit einem Salzgehalt im Bereich von 37 - 38 Teilen pro Tausend zur Folge hat, wenn der Anstrich auf der konvexen Oberfläche eines Zylinders mit einem Durchmesser von 1 Meter aufgetragen worden ist und man ihn einen zusammenhängenden Film hat bilden lassen und der gestrichene Zylinder mit einer Umfangsgeschwindigkeit von 27,78 km (15 Knoten) in Meerwasser bei einer Temperatur zwischen 10 und 30°C gedreht wird;
wobei, wenn das filmbildende Bindemittel mehr als ein Polymer umfaßt, jedes weitere Polymer entweder

ein Polymer P1, wie oben definiert, ist,
ein Polymer P2 mit einem Gewichtsmittel des Molekulargewichts von mindestens 2.000 ist, das in Wasser unlöslich ist und Segmente der Formel Ia, wie oben definiert, umfaßt, wobei die Art und Konzentration der Segmente Ia und anderer Segmente in dem Polymer P2 so gewählt sind, daß das Polymer P2, wenn es der Anstrichzusammensetzung S, wie oben definiert, als das Bindemittel einverleibt wird, eine Erosionsrate des Anstrichs in Meerwasser von weniger als 1 µm pro 18.520 km (10.000 nautische Meilen) zur Folge hat, wenn dieser wie oben definiert getestet wird, oder
ein filmbildendes Polymer P3 mit einem Gewichtsmittel des Molekulargewichts von mindestens 2.000 ist, das keine Segmente Ia umfaßt, wobei das Polymer P3, wenn es der Anstrichzusammensetzung S, wie oben definiert, als das Bindemittel einverleibt wird, eine Erosionsrate des Anstrichs in Meerwasser von weniger als 1 µm pro 18.520 km (10.000 nautische Meilen) zur Folge hat, wenn dieser wie oben definiert getestet wird, oder
ein Polymer P4 mit einem Gewichtsmittel des Molekulargewichts von mindestens 2.000 ist, welches Segmente umfaßt, die eine Erodierbarkeit in Meerwasser verleihen, bei denen es sich nicht um Segmente Ia handelt, wobei das Polymer P4, wenn es der Anstrichzusammensetzung S, wie oben definiert, als das Bindemittel einverleibt wird, eine Erosionsrate des Anstrichs in Meerwasser von mindestens 1 µm pro 18.520 km (10.000 nautische Meilen) zur Folge hat, wenn dieser wie oben definiert getestet wird,
und dann, wenn das filmbildende Bindemittel aus mehr als einem Polymer besteht, die Gesamt-Bindemittelzusammensetzung, wenn sie einer Anstrichzusammensetzung S, wie oben definiert, als das Bindemittel einverleibt wird, eine Erosionsrate des Anstrichs von mindestens 1 µm pro 18.520 km (10.000 nautische Meilen) in Meerwasser mit einem Salzgehalt im Bereich von 37 - 38 Teilen pro Tausend zur Folge hat, wenn dieser wie oben definiert getestet wird; und
das Antifouling-Anstrichmittel AFP eine Erosionsrate im Bereich zwischen 1 µm und 50 µm pro 18.520 km (10.000 nautische Meilen) in Meerwasser aufweist, wenn es unter den oben definierten Bedingungen getestet wird,

mit der Maßgabe, daß

A. das Antifouling-Anstrichmittel frei von Verbindungen von Zinn, Verbindungen von Arsen, Verbindungen von Blei und Verbindungen von Quecksilber ist und
B. die Anstrichmittelzusammensetzung weniger als 8 Volumen-%, berechnet auf der Basis des Gesamt-Trockensubstanzvolumens der Zusammensetzung, irgendeiner der folgenden Verbindungen oder irgendeiner Kombination der folgenden Verbindungen enthält: Hexachlorophen, Tetrachlorisophthalonitril und 1,2,3-Trichlor-4,6-dinitrobenzol in Pigmentform.

**2.** Anstrichmittelzusammensetzung nach Anspruch 1, in der das Gewichtsmittel des Molekulargewichts (Mw) des Polymers P1 im Bereich von 2.000 bis 1.000.000 liegt.

**3.** Anstrichmittelzusammensetzung nach Anspruch 2, in der das Gewichtsmittel des Molekulargewichts (Mw) des Polymers P1 im Bereich von 20.000 bis 200.000 liegt.

**4.** Anstrichmittelzusammensetzung nach Anspruch 1, in der das Gewichtsmittel des Molekulargewichts (Mw) des Polymers P2 im Bereich von 2.000 bis 1.000.000 liegt.

**5.** Anstrichmittelzusammensetzung nach Anspruch 4, in der das Gewichtsmittel des Molekulargewichts (Mw) des Polymers P2 im Bereich von 20.000 bis 200.000 liegt.

**6.** Anstrichmittelzusammensetzung nach Anspruch 1, in der das Gewichtsmittel des Molekulargewichts (Mw) des Polymers P3 im Bereich von 2.000 bis 1.000.000 liegt.

**7.** Anstrichmittelzusammensetzung nach Anspruch 6, in der das Gewichtsmittel des Molekulargewichts (Mw) des Polymers P3 im Bereich von 20.000 bis 200.000 liegt.

**8.** Anstrichmittelzusammensetzung nach Anspruch 1, in der das Gewichtsmittel des Molekulargewichts (Mw) des Polymers P4 im Bereich von 2.000 bis 1.000.000 liegt.

**9.** Anstrichmittelzusammensetzung nach Anspruch 8, in der das Gewichtsmittel des Molekulargewichts (Mw) des Polymers P4 im Bereich von 20.000 bis 200.000 liegt.

**10.** Anstrichmittelzusammensetzung nach irgendeinem der vorangehenden Ansprüche, in der der Gesamt-Pigmentgehalt der Zusammensetzung im Bereich von 25 - 50% des Trockensubstanzvolumens der Anstrichmittelzusammensetzung liegt.

**11.** Anstrichmittelzusammensetzung nach irgendeinem der vorangehenden Ansprüche, in der das (die) in Meerwasser lösliche(n) Pigment oder Pigmente mindestens 20% des Trockensubstanzvolumens der Anstrichmittelzusammensetzung ausmacht (ausmachen).

**12.** Anstrichmittelzusammensetzung nach irgendeinem der vorangehenden Ansprüche, in der jegliche in Meerwasser unlöslichen Pigmente, falls anwesend, höchstens 40% des Trockensubstanzvolumens der Anstrichmittelzusammensetzung ausmachen.

**13.** Anstrichmittelzusammensetzung nach irgendeinem der vorangehenden Ansprüche, in der $A_3$ $C_{1-4}$-Alkylen ist.

**14.** Anstrichmittelzusammensetzung nach irgendeinem der vorangehenden Ansprüche, in der jede Gruppe $B^x$ unabhängig eine Gruppe $B^1$, $B^2$, $B^4$ oder $B^5$ ist.

**15.** Anstrichmittelzusammensetzung nach irgendeinem der Ansprüche 1 - 14, in der jede Gruppe $B^x$ unabhängig eine Gruppe $B^1$ oder $B^2$ ist.

**16.** Anstrichmittelzusammensetzung nach Anspruch 15, in der a3 0 ist.

**17.** Anstrichmittelzusammensetzung nach Anspruch 16, in der $R_1$ und $R_2$ unabhängig Wasserstoff, Methyl oder Ethyl sind.

**18.** Anstrichmittelzusammensetzung nach irgendeinem der Ansprüche 1 - 12, in der die Segmente Ia von Monomeren abgeleitet sind, die ausgewählt sind aus

(a) Monohydroxy-funktionellen Acrylaten und Methacrylaten, ausgewählt aus 2-Hydroxyethylmethacrylat, 2-Hydroxyethylacrylat, Butandiolmonoacrylat, Butandiolmonomethacrylat, 2-Hydroxypropylmethacrylat, 2-Hydroxypropylacrylat, 3-Hydroxypropylmethacrylat, 3-Hydroxypropylacrylat, 3-Methoxy-2-hydroxypropylmethacrylat, 3-Methoxy-2-hydroxypropylacrylat, 2-Hydroxybutylacrylat und 2-Hydroxybutylmethacrylat;
(b) Dihydroxy-funktionellen Acrylaten und Methacrylaten, ausgewählt aus 2,3-Dihydroxypropylmethacrylat, 2,3-Dihydroxypropylacrylat, 3,4-Dihydroxybutylacrylat und 3,4-Dihydroxybutylmethacrylat;
(c) Hydroxy-funktionellen Acrylamiden und Methacrylamiden, ausgewählt aus N-(2-Hydroxyethyl)methacrylamid, N-(2-Hydroxyethyl)acrylamid, N-(2-Hydroxypropyl)methacrylamid, N-(2-Hydroxypropyl)acrylamid, N-Methylolmethacrylamid, N-Methylolacrylamid, N-(1-Hydroxyethyl)acrylamid, N-(l-Hydroxyethyl)methacrylamid, N-[1,1-Bis(hydroxymethyl)ethyl]acrylamid, N-[1,1-Bis(hydroxymethyl)ethyl]methacrylamid, N-(2,3-Dihydroxypropyl)acrylamid, N-(2,3-Dihydroxypropyl) methacrylamid und N-(1-Ethyl-2-hydroxyethyl)methacrylamid;
(d) Hydroxy-funktionellen Vinylethern, ausgewählt aus Vinylhydroxybutylether und Vinyl-2-hydroxyethylether;
(e) Hydroxy-funktionellen Allylethern, ausgewählt aus Allyl-2-hydroxyethylether, 3-Allyloxy-1,2-propandiol und Allyloxypropanol;
(f) Allylalkoholen, ausgewählt aus Allylalkohol, 1-Methylallylalkohol und 2-Methylallylalkohol; und
(g) Hydroxy-funktionellen Alkenen, ausgewählt aus 1-Buten-4-ol, 2-Methyl-1-buten-4-ol, 1-Penten-4-ol, 1-Penten-5-ol, 2-Methyl-1-penten-4-ol und 3-Methyl-1-penten-4-ol.

**19.** Anstrichmittelzusammensetzung nach Anspruch 18, in der die Monomere ausgewählt sind aus 2-Hydroxyethylmethacrylat, 2-Hydroxyethylacrylat, Butandiolmonoacrylat, Butandiolmonomethacrylat, 2-Hydroxypropylmethacrylat, 2-Hydroxypropylacrylat, 3-Hydroxypropylmethacrylat, 3-Hydroxypropylacrylat, 3-Methoxy-2-hydroxypropylmethacrylat, 3-Methoxy-2-hydroxypropylacrylat, 2-Hydroxybutylacrylat, 2-Hydroxybutylmethacrylat, 2,3-Dihydroxypropylmethacrylat, 2,3-Dihydroxypropylacrylat, 3,4-Dihydroxybutylacrylat und 3,4-Dihydroxybutylmethacrylat.

**20.** Anstrichmittelzusammensetzung nach Anspruch 19, in der die Monomere aus 2-Hydroxyethylmethacrylat, 2-Hydroxyethylacrylat, Butandiolmonoacrylat, Butandiolmonomethacrylat, 2-Hydroxypropylmethacrylat und 2-Hydroxypropylacrylat ausgewählt sind.

**21.** Anstrichmittelzusammensetzung nach irgendeinem der Ansprüche 1 - 12, in der das Polymer P1 das Homopolymer von 2-Hydroxyethylmethacrylat ist.

**22.** Anstrichmittelzusammensetzung nach irgendeinem der vorangehenden Ansprüche, in der das Antifouling-Mittel ein Biozid oder ein Bewuchs-ablösendes Mittel ist.

**23.** Anstrichmittelzusammensetzung nach Anspruch 22, in der das Biozid ein Algizid, ein Fungizid oder ein Bakterizid ist.

**24.** Anstrichmittelzusammensetzung nach Anspruch 22 oder 23, in der das Biozid aus Kupfer-Verbindungen, wie Kupfer(I)-oxid, Kupfer(I)-thiocyanat, Kupferpulver, Kupferlegierungspulver, Kupfernaphthenat, Kupferoctoat oder einer Kupfer-Kolophonium-Verbindung; Metalldithiocarbamaten, wie Zinkethylenbis(dithiocarbamat), Zinkmethylenbis (dithiocarbamat), Kupferethylenbis (dithiocarbamat), Zinkdimethyldithiocarbamat; Zinkoxid; Zinkpyridinthion; Tetramethylthiuramdisulfid; Methylenbis (thioharnstoff); n-Butylkatechol; Captan; substituierten Isothiazolonen, wie 4,5-Dichlor-2-n-octyl-n-isothiazolin-3-on; 2-(N,N-Dimethylthiocarbamoylthio)-5-nitrothiazol; Tetrachlorisophthalonitril; 2-Methylthio-4-(tert-butylamino)-6-(cyclopropylamino) -s-triazin; N,N-Dimethyl-N'-phenyl-N'-(fluordichlormethylthio)sulfamid; N'-(3,4-Dichlorphenyl)-N,N-dimethylharnstoff; und Mischungen derselben ausgewählt ist.

**25.** Anstrichmittelzusammensetzung nach Anspruch 22, in der es sich bei dem Bewuchs-ablösenden Mittel um eine Silicon-Verbindung, wie ein(e) Dimethylsiloxan-haltige(s) Flüssigkeit oder Harz oder ein flüssiges Methylphenylsilicon; oder um einen Kohlenwasserstoff, wie Petrolatum, Weißöl, Paraffinöl oder Paraffinwachs; oder um Mischungen derselben handelt.

**26.** Anstrichmittelzusammensetzung nach irgendeinem der vorangehenden Ansprüche, in der die in Meerwasser unlöslichen Pigmente aus Handelsgüten von Titandioxid, rotem Eisenoxid, Ruß, Graphit, gelbem Eisenoxid, Phthalocyaninblau und Phthalocyaningrün sowie aus pigmentartigen Bestandteilen ausgewählt sind, welche aus Calciumcarbonat, Dolomit, Talkum, Glimmer, Bariumsulfat, Kaolin und Quarzmehl ausgewählt sind.

**27.** Anstrichmittel nach irgendeinem der vorangehenden Ansprüche, das einen flüssigen Träger umfaßt, welcher ausgewählt ist aus Wasser; Alkoholen, wie Methanol, Ethanol, Propanol, Isopropanol, Butanol, Isobutanol, Benzylalkohol, 1,2-Propandiol; Alkohol/Wasser-Mischungen, wie Ethanol/Wasser-Mischungen; aliphatischen und aromatischen Kohlenwasserstoffen, wie Lackbenzin, Toluol, Xylol oder Naphtha-Lösungsmittel; Ketonen, wie Methylethylketon, Aceton, Methylisobutylketon, Methylisoamylketon, Diacetonalkohol oder Cyclohexanon; Etheralkoholen, wie 2-Butoxyethanol, Propylenglycolmonomethylether oder Butyldiglycol; Estern, wie Methoxypropylacetat, n-Butylacetat oder 2-Ethoxyethylacetat; chlorierten Kohlenwasserstoffen, wie Methylenchlorid oder Trichlorethylen; und Mischungen derselben.

**28.** Meerwasser ausgesetzte Struktur, die einen anhaftenden, zusammenhängenden, freiliegenden, durch Meerwasser erodierbaren Anstrichfilm aus einem Antifouling-Anstrichmittel aufweist, wobei der Anstrich ein filmbildendes Bindemittel, wie in Anspruch 1 definiert, mindestens ein Pigment, das in Meerwasser in einer Menge von mindestens 1 mg/l löslich ist, mindestens ein Antifouling-Mittel, bei dem es sich um das Pigment oder um eines der Pigmente handeln kann, umfaßt, wobei der Gesamt-Pigmentgehalt des Anstrichs im Bereich von 10 - 60% des Trockensubstanzvolumens des Anstrichs liegt, das (die) in Meerwasser lösliche(n) Pigment oder Pigmente mindestens 10% des Trockensubstanzvolumens des Anstrichs ausmachen, jegliche in Meerwasser unlöslichen Pigmente, wenn anwesend, höchstens 50% des Trockensubstanzvolumens des Anstrichs ausmachen, wobei die durchschnittliche Trockenfilmdicke des Anstrichs mindestens 40 µm beträgt.

**29.** Meerwasser ausgesetzte Struktur nach Anspruch 28, bei der die durchschnittliche Trockenfilmdicke des Anstrichs im Bereich von 40 - 1000 µm liegt.

**30.** Meerwasser ausgesetzte Struktur nach Anspruch 29, bei der die durchschnittliche Trockenfilmdicke des Anstrichs im Bereich von 50 - 600 µm liegt.

**Revendications**

**1.** Une composition de peinture antisalissure rongeable par l'eau de mer, AFP, pour la protection des surfaces marines, comprenant un liant filmogène, au moins un pigment soluble dans l'eau de mer en quantité d'au moins 1 mg/l, au moins un agent antisalissure qui peut consister en le pigment ou l'un des pigments, la teneur totale en pigments de la composition représentant de 10 à 60 % du volume des matières solides de la composition de peinture, le ou les pigments solubles à l'eau de mer constituant au moins 10 % du volume des matières solides de la composition de peinture, les pigments insolubles dans l'eau de mer éventuellement présents constituant au maximum 50 % du volume des matières solides de la composition de peinture,
ledit liant comprenant au moins un polymère P1 d'un poids moléculaire moyen, moyenne en poids, d'au moins 2.000, qui est insoluble dans l'eau et qui contient, en tant que segments conférant la rongeabilité à l'eau de mer, des segments de formule la

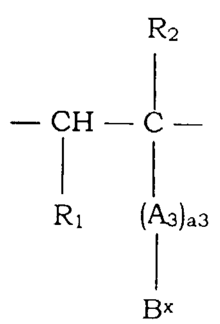

(Ia)

dans laquelle

$R_1$ et $R_2$ représentent chacun, indépendamment l'un de l'autre, l'hydrogène ou un groupe alkyle en $C_1$-$C_4$,

$A_3$ représente un groupe alkylène en $C_1$-$C_4$ ou phénylène,

$a_3$ est égal à 0 ou 1 et le groupe $B^x$ consiste en un groupe $D^x$ ou en un groupe $B^1$, $B^2$, $B^3$, $B^4$ ou $B^5$

$-CO-O-D^x$ ($B^1$) $-CO-NH-D^x$ ($B^2$)

$-NH-CO-D^x$ ($B^3$) $-O-D^x$ ($B^4$)

$-OH$ ($B^5$)

$D^x$ consistant en un groupe

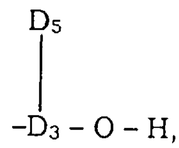

dans lequel $D_3$ représente un groupe alkylène en $C_1$-$C_4$ ; un groupe phénylène éventuellement substitué par un ou deux groupes alkyle en $C_1$-$C_2$ ; ou un motif phénylalkyle en $C_1$-$C_4$, le groupe $D_5$ étant fixé sur le cycle phényle, la liaison libre représentée étant fixée sur le cycle phényle et le groupe -O-H fixé à la partie alkyle, ou inversement, la partie phényle portant éventuellement un ou deux substituants choisis, indépendamment les uns des autres, parmi les groupes hydroxy et alcoxy en $C_1$-$C_4$, et $D_5$ représente l'hydrogène, un groupe hydroxy ou alcoxy en $C_1$-$C_4$ ; la nature et la concentration des segments Ia dans le polymère P1 étant choisies en sorte que le polymère P1, lorsqu'il est incorporé en tant que liant dans une composition de revêtement S à la composition suivante des matières solides, exprimée en parties en volume des matières solides :

- 60 parties en volume du liant polymère(s)],
- 10 parties en volume d'un oxyde cuivreux à une dimension de particule moyenne de 2 à 4 µm,
- 26 parties en volume d'un oxyde de zinc ayant une dimension de particule moyenne d'environ 0,2 µm et
- 4 parties en volume d'une bentonite thixotropique,

conduisent à une vitesse d'érosion du revêtement d'au moins 1 µm pour 18.520 km (10.000 milles nautiques) dans l'eau de mer ayant une salinité de 37 à 38 parties pour 1.000 lorsque le revêtement a été appliqué sur la surface convexe d'un cylindre d'1 m de diamètre sur laquelle on l'a laissé former une pellicule continue et qu'on fait tourner le cylindre revêtu à une vitesse périphérique de 27,78 km (15 noeuds) dans l'eau de mer à une température de 10 à 30°C ;
étant précisé que, lorsque le liant filmogène consiste en plusieurs polymères, chaque autre polymère consiste soit

- en un polymère P1 tel que défini ci-dessus,

- en un polymère P2 au poids moléculaire moyen, moyenne en poids, d'au moins 2.000, qui est insoluble dans l'eau et contient des segments de formule Ia tels que définis ci-dessus, la nature et la concentration des segments Ia et des autres segments contenus dans le polymère P2 étant choisies en sorte que le polymère P2, lorsqu'il est incorporé en tant que liant dans la composition de revêtement S définie ci-dessus, conduise à une vitesse d'érosion du revêtement de moins de 1 µm pour 18.520 km (10.000 milles nautiques) dans l'eau de mer, l'essai étant réalisé comme défini ci-dessus, soit

- en un polymère filmogène P3 au poids moléculaire moyen, moyenne en poids, d'au moins 2.000, qui ne contient pas de segment Ia, le polymère P3, lorsqu'il est incorporé en tant que liant dans la composition de revêtement S définie ci-dessus, conduisant à une vitesse d'érosion du revêtement inférieure à 1 µm pour 18.520 km (10.000 milles nautiques) dans l'eau de mer, l'essai étant réalisé comme décrit ci-dessus, soit

- en un polymère P4 au poids moléculaire moyen, moyenne en poids, d'au moins 2.000, qui contient des segments conférant la rongeabilité à l'eau de mer autres que les segments Ia, le polymère P4, lorsqu'il est incorporé en tant que liant dans la composition de revêtement S définie ci-dessus, conduisant à une vitesse d'érosion du revêtement d'au moins 1 µm pour 18.520 km (10.000 milles nautiques) dans l'eau de mer, l'essai étant réalisé comme décrit ci-dessus,

et, lorsque le liant filmogène consiste en plusieurs polymère, la composition totale de liant, lorsqu'elle est incorporée en tant que liant dans une composition de revêtement S telle que définie ci-dessus, conduit à une vitesse d'érosion du revêtement d'au moins 1 µm pour 18.520 km (10.000 milles nautiques) dans l'eau de mer à une salinité de 37 à 38 parties pour 1.000, l'essai étant effectué comme décrit ci-dessus ; et la peinture antisalissure AFP ayant une vitesse d'érosion dans l'intervalle de 1 µm à 50 µm pour 18.520 km (10.000 milles nautiques) dans l'eau de mer, les essais étant effectués dans les conditions décrites ci-dessus,
sous réserve que

A. la peinture antisalissure est exempte de dérivés de l'étain, de dérivés de l'arsenic, de dérivés du plomb et de dérivés du mercure et

B. la composition de peinture contient moins de 8 % en volume, sur le volume total des matières solides de la composition, de l'un quelconque des composés suivants ou d'une combinaison quelconque des composés suivants : hexachlorophène, tétrachloroisophtalonitrile et 1, 2,3-trichloro-4,6-dinitrobenzène sous forme pigmentaire.

**2.** Une composition de peinture selon la revendication 1, dans laquelle le poids moléculaire moyen, moyenne en poids, Mw, du polymère P1 se situe dans l'intervalle de 2.000 à 1.000.000.

**3.** Une composition de peinture selon la revendication 2, dans laquelle le poids moléculaire moyen, moyenne en poids, Mw, du polymère P1 se situe dans l'intervalle de 20.00 à 200.000.

**4.** Une composition de peinture selon la revendication 1, dans laquelle le poids moléculaire moyen, moyenne en poids, Mw, du polymère P2 se situe dans l'intervalle de 2.000 à 1.000.000.

**5.** Une composition de peinture selon la revendication 4, dans laquelle le poids moléculaire moyen, moyenne en poids, Mw, du polymère P2 se situe dans l'intervalle de 20.000 à 200.000.

**6.** Une composition de peinture selon la revendication 1, dans laquelle le poids moléculaire moyen, moyenne en poids, Mw, du polymère P3 se situe dans l'intervalle de 2.000 à 1.000.000.

**7.** Une composition de peinture selon la revendication 6, dans laquelle le poids moléculaire moyen, moyenne en poids, Mw, du polymère P3 se situe dans l'intervalle de 20.000 à 200.000.

**8.** Une composition de peinture selon la revendication 1, dans laquelle le poids moléculaire moyen, moyenne en poids, Mw, du polymère P4 se situe dans l'intervalle de 2.000 à 1.000.000.

**9.** Une composition de peinture selon la revendication 8, dans laquelle le poids moléculaire moyen, moyenne en poids, Mw, du polymère P4 se situe dans l'intervalle de 20.000 à 200.000.

**10.** Une composition de peinture selon l'une quelconque des revendications qui précèdent, dans laquelle la teneur totale en pigments de la composition se situe dans l'intervalle de 25 à 50 % du volume des matières solides de la composition de peinture.

**11.** Une composition de peinture selon l'une quelconque des revendications qui précèdent, dans laquelle le ou les pigments solubles dans l'eau de mer constituent au moins 20 % du volume des matières solides de la composition de peinture.

**12.** Une composition de peinture selon l'une quelconque des revendications qui précèdent, dans laquelle les pigments insolubles dans l'eau de mer éventuellement présents constituent au maximum 40 % du volume des matières solides de la composition de peinture .

**13.** Une composition de peinture selon l'une quelconque des revendications qui précèdent, pour laquelle $A_3$ représente un groupe alkylène en $C_1$-$C_4$.

**14.** Une composition de peinture selon l'une quelconque des revendications qui précèdent, pour laquelle chacun des groupes $B^x$ consiste, indépendamment des autres, en un groupe $B^1$, $B^2$, $B^4$ ou $B^5$,

**15.** Une composition de peinture selon l'une quelconque des revendications 1 à 14, pour laquelle chacun des groupes $B^x$ consiste, indépendamment des autres, en un groupe $B^1$ ou $B^2$.

**16.** Une composition de peinture selon la revendication 15, pour laquelle a3 est égal à 0.

**17.** Une composition de peinture selon la revendication 16, pour laquelle $R_1$ et $R_2$ représentent chacun, indépendamment l'un de l'autre, l'hydrogène, un groupe méthyle ou éthyle.

**18.** Une composition de peinture selon l'une quelconque des revendications 1 à 12, dans laquelle les segments la dérivent de monomères choisis parmi

(a) des acrylates et méthacrylates monohydroxyfonctionnels choisis parmi le méthacrylate de 2-hydroxyéthyle, l'acrylate de 2-hydroxyéthyle, le monoacrylate du butanediol, le monométhacrylate du butanediol, le méthacrylate de 2-hydroxypropyle, l'acrylate de 2-hydroxypropyle, le méthacrylate de 3-hydroxypropyle, l'acrylate de 3-hydroxypropyle, le méthacrylate de 3-méthoxy-2-hydroxypropyle, l'acrylate de 3-méthoxy-2-hydroxypropyle, l'acrylate de 2-hydroxybutyle et le méthacrylate de 2-hydroxybutyle,

(b) des acrylates et méthacrylates dihydroxyfonctionnels choisis parmi le méthacrylate de 2,3-dihydroxypropyle, l'acrylate de 2,3-dihydroxypropyle, l'acrylate de 3,4-dihydroxybutyle et le méthacrylate de 3,4-dihydroxybutyle ;

(c) des acrylamides et méthacrylamides hydroxyfonctionnels choisis parmi le N-(2-hydroxyéthyl)-méthacrylamide, le N-(2-hydroxyéthyl)-acrylamide, le N-(2-hydroxypropyl)-méthacrylamide, le N-(2-hydroxypropyl) acrylamide, le N-méthylolméthacrylamide, le N-méthylolacrylamide, le N-(1-hydroxyéthyl)-acrylamide, le N-(1-hydroxyéthyl)-méthacrylamide, le N-[1,1-bis-(hydroxyméthyl)-éthyl]-acrylamide, le N-[1,1-bis-(hydroxyméthyl)-éthyl]-méthacrylamide, le N-(2,3-dihydroxypropyl)-acrylamide, le N-(2,3-dihydroxypropyl)-méthacrylamide et le N-(1-éthyl-2-hydroxyèthyl)-méthacrylamide ;

(d) des éthers vinyliques hydroxyfonctionnels choisis parmi l'éther vinylhydroxybutylique et l'éther vinyl-2-hydroxyéthylique;

(e) des éthers allyliques hydroxyfonctionnels choisis parmi l'éther allyl-2-hydroxyéthylique, le 3-allyloxy-1,2-propanediol et l'allyloxypropanol;

(f) des alcools allyliques choisis parmi l'alcool allylique, l'alcool 1-méthylallylique et l'alcool 2-méthylallylique ; et

(g) des alcènes hydroxyfonctionnels choisis parmi le I-butène-4-ol, le 2-méthyl-1-butène-4-ol, le 1-pentène-4-ol, le 1-pentène-5-ol, le 2-méthyl-1-pentène-4-ol et le 3-méthyl-1-pentène-4-ol.

**19.** Une composition de peinture selon la revendication 18, pour laquelle les monomères sont choisis parmi

- le méthacrylate de 2-hydroxyéthyle, l'acrylate de 2-hydroxyéthyle, le monoacrylate du butanediol, le monométhacrylate du butanediol, le méthacrylate de 2-hydroxypropyle, l'acrylate de 2-hydroxypropyle, le méthacrylate de 3-hydroxypropyle, l'acrylate de 3-hydroxypropyle, le méthacrylate de 3-méthoxy-2-hydroxypropyle, l'acrylate de 3-méthoxy-2-hydroxypropyle, l'acrylate de 2-hydroxybutyle, le méthacrylate de 2-hydroxybutyle, le méthacrylate de 2,3-dihydroxypropyle, l'acrylate de 2,3-dihydroxypropyle, l'acrylate de 3,4-dihydroxybutyle et le méthacrylate de 3,4-dihydroxybutyle.

**20.** Une composition de peinture selon la revendication 19, pour laquelle les monomères sont choisis parmi le méthacrylate de 2-hydroxyéthyle, l'acrylate de 2-hydroxyéthyle, le monoacrylate du butanediol, le monométhacrylate du butanediol, le méthacrylate de 2-hydroxypropyle et l'acrylate de 2-hydroxypropyle.

**21.** Une composition de peinture selon l'une quelconque des revendications 1 à 12, dans laquelle le polymère P1 est l'homopolymère du méthacrylate de 2-hydroxyéthyle.

**22.** Une composition de peinture selon l'une quelconque des revendications qui précèdent, dans laquelle l'agent antisalissure est un biocide ou un agent dégageant les salissures.

**23.** Une composition de peinture selon la revendication 22, dans laquelle le biocide est un algicide, un fongicide ou un bactéricide.

**24.** Une composition de peinture selon la revendication 22 ou 23, dans laquelle le biocide est choisi parmi les composés du cuivre tels que l'oxyde cuivreux, le thiocyanate cuivreux, la poudre de cuivre, une poudre d'alliage de cuivre, du naphténate de cuivre, de l'octanoate de cuivre ou un résinate de cuivre ; les dithiocarbamates métalliques tels que l'éthylène-bis-(dithiocarbamate) de zinc, le méthylène-bis-(dithiocarbamate) de zinc, l'éthylène-bis-(dithiocarbamate) de cuivre, le diméthyldithiocarbamate de zinc ; l'oxyde de zinc ; la pyridinethione de zinc ; le disulfure de tétraméthylthiurame ; la méthylène-bis-(thiourée) ; le n-butyl catéchol ; le captane ; des isothiazolones substituées comme la 4,5-dichloro-2-n-octyl-n-isothiazoline-3-one ; le 2-(N,N-diméthylthiocarbamoylthio)-5-nitrothiazole ; le tétrachloro-iso-phtalonitrile ; la 2-méthylthio-4-(tert-butylamino)-6-(cyclopropylamino)-s-triazine; le N,N-diméthyl-N'-phényl-N'-(fluorodichlorométhylthio)-sulfamide ; la N'-(3,4-dichlorophényl)-N,N-diméthylurée ; et leurs mélanges.

**25.** Une composition de peinture selon la revendication 22, dans laquelle l'agent dégageant les salissures est un dérivé de silicone tel qu'un liquide ou une résine contenant du diméthylsiloxane, ou un méthylphénylsilicone liquide ; ou un hydrocarbure tel que la vaseline, l'huile blanche, l'huile de paraffine ou la cire de paraffine ; ou leurs mélanges.

**26.** Une composition de peinture selon l'une quelconque des revendications qui précèdent, dans laquelle les pigments insolubles à l'eau de mer sont choisis parmi les différentes qualités de dioxyde de titane, d'oxyde de fer rouge, de noir de carbone, de graphite, d'oxyde de fer jaune, de bleu de phtalocyanine et de vert de phtalocyanine, ou parmi des composants analogues à des pigments, eux-mêmes choisis parmi le carbonate de calcium, la dolomie, le talc, le mica, le sulfate de baryum, le kaolin et la farine de quartz.

**27.** Une composition de peinture selon l'une quelconque des revendications qui précèdent, qui comprend un véhicule liquide choisi parmi l'eau ; les alcools tels que le méthanol, l'éthanol, le propanol, l'isopropanol, le butanol, l'isobutanol, l'alcool benzylique, le 1,2-propanediol ; des mélanges alcool/eau tels que des mélanges éthanol/eau ; des hydrocarbures aliphatiques et aromatiques tels que le white-spirit, le toluène, le xylène ou le solvant naphta ; des cétones comme la méthyléthylcétone, l'acétone, la méthylisobutylcétone, la méthylisoamylcétone, le diacétonne-alcool ou la cyclohexanone ; des éther-alcools comme le 2-butoxyéthanol, l'éther monométhylique du propylèneglycol ou le butyldiglycol ; des esters comme l'acétate de méthoxypropyle, l'acétate de n-butyle ou l'acétate de 2-éthoxyéthyle ; des hydrocarbures chlores comme le chlorure de méthylène ou le trichloréthylène ; et leurs mélanges.

**28.** Une structure marine portant une pellicule de revêtement adhérente, exposée en continu et rongeable à l'eau de mer d'une peinture antisalissure, le revêtement comprenant un liant filmogène tel que défini dans la revendication 1, au moins un pigment soluble dans l'eau de mer en proportion d'au moins 1 mg/l, au moins un agent antisalissure qui peut consister en le pigment ou l'un des pigments, la teneur totale en pigments du revêtement représentant de 10 à 60 % du volume des matières solides du revêtement, le ou les pigments solubles dans l'eau de mer constituant au moins 10 % du volume des matières solides du revêtement et les pigments insolubles dans l'eau de mer éventuellement présents, constituant au maximum 50 % du volume des matières solides du revêtement, l'épaisseur moyenne de la pellicule sèche du revêtement étant d'au moins 40 µm.

**29.** Une structure marine selon la revendication 28, dans laquelle l'épaisseur moyenne de la pellicule sèche du revêtement se situe dans l'intervalle de 40 à 1.000 µm.

**30.** Une structure marine selon la revendication 29, dans laquelle l'épaisseur moyenne de la pellicule sèche du revêtement se situe dans l'intervalle de 50 à 600 µm,